# EUROPEAN PATENT APPLICATION

(11) **EP 4 685 980 A1**
(43) Date of publication of application: **28.01.2026**
(21) Application number: 25768487.8
(22) Date of filing: 23.01.2025
(51) Int. Cl.: H01M 50/505, H01M 50/593, H01M 50/291, H01M 50/296, H01M 10/04

(54) **INTER-BUS BAR UNIT, PACK HOUSING COMPRISING SAME, BATTERY PACK COMPRISING SAME, AND METHOD FOR MANUFACTURING SAME**

(30) Priority: 08.03.2024 KR 20240033075
(71) Applicant: LG Energy Solution, Ltd., Seoul 07335 (KR)
(72) Inventor: SON, Hong Se, Daejeon 34122 (KR)
(74) Representative: Hoffmann Eitle
(86) International application number: PCT/KR2025/001316
(87) International publication number: WO 2025/187963

(57) **Abstract**

Disclosed are an inter-busbar unit including a conductive member electrically connected to a module terminal at a battery module, a first partition wall unit having a seating recess allowing the conductive member to be seated therein, and a second partition wall unit seated on the first partition wall unit, wherein opposite ends of the conductive member are exposed to different sides, a pack housing including the same, a battery pack including the same, and a method of manufacturing the same.

## Description

### [Technical Field]

This application claims the benefit of priority to Korean Patent Application No. 10-2024-0033075 filed on March 8, 2024, the disclosure of which is incorporated herein by reference in its entirety.

The present invention relates to an inter-busbar unit, a pack housing including the same, a battery pack including the same, and a method of manufacturing the same, and more particularly to an inter-busbar unit that can be coupled to a pack housing, a pack housing including the same, a battery pack including the same, and a method of manufacturing the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

There are a lithium ion battery, a lithium polymer battery, a nickel cadmium battery, a nickel hydride battery, and a nickel zinc battery as secondary batteries that are widely used at present. The operating voltage of a unit secondary battery cell, i.e. a unit battery cell, is about 2.0 V to 5.0 V. When output voltage higher than the above operating voltage is required, therefore, a plurality of battery cells may be connected to each other in series to constitute a cell module assembly. In addition, cell module assemblies may be connected to each other in series or in parallel to constitute a battery module depending on required output voltage or charge and discharge capacities, and a battery pack is generally manufactured using at least one battery module by adding an additional component.

However, a lithium secondary battery is at risk of explosion due to overheating, and therefore ensuring safety thereof is a major challenge. Overheating may occur for various reasons, one of which is overcurrent flowing in the lithium secondary battery. The overcurrent causes the internal temperature of the secondary battery to rise rapidly due to heat generation, and the rapid increase in temperature causes thermal runaway, which may lead to explosion of the secondary battery.

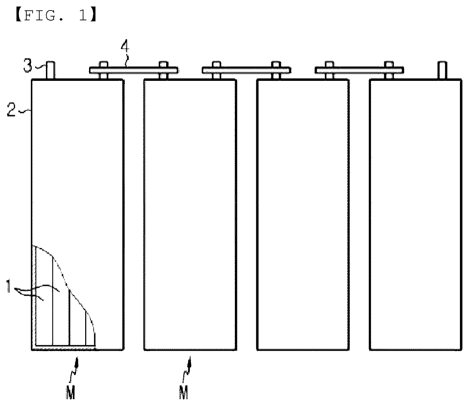

FIG. 1 is a schematic view of a battery pack having a conventional busbar applied thereto. As shown in FIG. 1, the battery pack may be configured such that a battery module M including a plurality of battery cells 1 is connected to an external terminal 3 of another battery module M adjacent thereto via an inter-busbar 4.

In this case, there is the problem that the remaining part of the inter-busbar 4, excluding the area of the inter-busbar in contact with the external terminal 3, is exposed to discharge generated during thermal runaway, which increases the probability of internal short circuit occurring.

### (Prior Art Document)

(Patent Document 1) Korean Patent Application Publication No. 10-2015-0028073

### [Disclosure]

### [Technical Problem]

The present invention has been made in view of the above problems, and it is an object of the present invention to provide an inter-busbar unit configured such that the remaining area of the inter-busbar unit, excluding the area of the inter-busbar unit in contact with an external terminal of a battery module, is not exposed to discharge, thereby reducing the probability of internal short circuit occurring, a pack housing including the same, a battery pack including the same, and a method of manufacturing the same.

### [Technical Solution]

As a technical means for achieving the above object, an inter-busbar unit according to an embodiment of the present invention includes a conductive member (110) electrically connected to a module terminal (310) at a battery module (300), a first partition wall unit (120) having a seating recess (121) allowing the conductive member (110) to be seated therein, and a second partition wall unit (130) seated on an upper portion of the first partition wall unit (120), wherein opposite ends of the conductive member are exposed to different sides.

Also, in the inter-busbar unit according to the embodiment of the present invention, the conductive member (110) may extend in an extension direction in which the first partition wall unit (120) extends, and the seating recess (121) may be formed in an upper surface of the first partition wall unit (120) and extending in the extension direction.

Also, in the inter-busbar unit according to the embodiment of the present invention, the first partition wall unit (120) may include a first opening (122) that exposes one end of the conductive member (110) from a first side surface (120a) facing the battery module (300) located on one side, and the second partition wall unit (130) may include a third opening (131) that corresponds to the first opening (122) and that exposes one end of the conductive member (110) from a third side surface (130a) facing the battery module (300) located on one side.

Also, in the inter-busbar unit according to the embodiment of the present invention, the first partition wall unit (120) may include a second opening (123) that exposes the other end of the conductive member (110) from a second side surface (120b) facing the battery module (300) on the other side, and the second partition wall unit (130) may include a fourth opening (132) that corresponds to the second opening (123) and that exposes the other end of the conductive member (110) is exposed from a fourth side surface (130b) facing the battery module (300) on the other side.

Also, in the inter-busbar unit according to the embodiment of the present invention, the first opening (122) and the second opening (123) may be formed at positions that do not overlap each other in a thickness direction of the first partition wall unit (120), and the third opening (131) and the fourth opening (132) may be formed at positions that do not overlap each other in a thickness direction of the second partition wall unit (130).

Also, in the inter-busbar unit according to the embodiment of the present invention, the first partition wall unit (120) may be on an upper surface thereof with a protrusion (124) that partially protrudes upward, and the protrusion (124) may be at both ends of the first partition wall unit (120).

Also, in the inter-busbar unit according to the embodiment of the present invention, the second partition wall unit (130) may be in a lower surface thereof with a depression (133) that is partially depressed upward and that corresponds to the protrusion (124), and the depression (133) may be configured to be coupled to the protrusion (124).

Also, in the inter-busbar unit according to the embodiment of the present invention, the conductive member (110) may be made of an electrically conductive material including a metal material.

Also, in the inter-busbar unit according to the embodiment of the present invention, an insulating material (111) may be applied to the remaining area of an outer surface of the conductive member (110) excluding an area in contact with the module terminal (310).

In addition, a pack housing including the inter-busbar unit according to the embodiment of the present invention includes an outer frame (210), a lattice-shaped partition wall (220) in the outer frame (210), the partition wall being disposed so as to form a plurality of receiving recesses (230) each configured to receive the battery module (300), and an inter-busbar unit (100) seated on an upper portion of the partition wall (220).

Also, in the pack housing according to the embodiment of the present invention, the partition wall (220) may include a first partition wall (221) disposed in a first direction parallel to an axial direction in which the module terminal (310) of the battery module (300) is disposed and a second partition wall (222) disposed in a second direction perpendicular to the first direction.

Also, in the pack housing according to the embodiment of the present invention, a coupling protrusion (221a) may be formed on an upper surface of the first partition wall (221) and partially protruding upward.

Also, in the pack housing according to the embodiment of the present invention, a coupling recess (125) corresponding to the coupling protrusion (221a) may be formed in a lower surface of the first partition wall unit (120) and partially depressed upward, and the coupling recess (125) may be configured to be coupled to the coupling protrusion (221a).

In addition, a battery pack including the pack housing according to the embodiment of the present invention includes the pack housing (200) including the inter-busbar unit (100), the outer frame (210), and the partition wall (220) and a plurality of battery modules (300), each of the battery modules having the module terminal (310).

Also, in the battery pack including the pack housing according to the embodiment of the present invention, the plurality of battery modules (300) may be disposed such that the position of the module terminal (310) of each battery module (300) does not overlap the position of the module terminal (310) of a battery module (300) closest thereto in the second direction.

In addition, a method of manufacturing the battery pack including the pack housing according to the embodiment of the present invention includes (S1) receiving the plurality of battery modules (300) in the plurality of receiving recesses (230), (S2) coupling the coupling recess (125) of the inter-busbar unit (100) and the coupling protrusion (221a) of the first partition wall (221) to each other thereby coupling the inter-busbar unit (100) and the first partition wall (221) to each other, and (S3) bringing the module terminals (310) into electrical contact with the conductive member (110).

Also, in the method of manufacturing the battery pack including the pack housing according to the embodiment of the present invention, in step (S1), the plurality of battery modules (300) may be disposed such that the position of the module terminal (310) of each battery module (300) does not overlap the position of the module terminal (310) of a battery module (300) closest thereto in the second direction.

Also, the method of manufacturing the battery pack including the pack housing according to the embodiment of the present invention may further include adding an insulating material to an upper surface of the conductive member (110) after step (S3).

### [Advantageous Effects]

As is apparent from the above description, in an inter-busbar unit according to the present invention, a pack housing including the same, a battery pack including the same, and a method of manufacturing the same, the inter-busbar unit is embedded in a partition wall, and the inter-busbar unit, excluding the part of the inter-busbar unit electrically connected to a module terminal provided at the battery module, is wrapped with an insulating member, whereby it is possible to prevent the occurrence of internal short circuit even if discharge generated during thermal runaway of a cell scatters and accumulates on the inter-busbar unit.

### [Description of Drawings]

FIG. 1 is a schematic view of a battery pack having a conventional busbar applied thereto.
FIG. 2 is a perspective view of an inter-busbar unit according to an embodiment of the present invention.
FIG. 3 is an exploded perspective view of the inter-busbar unit according to the embodiment of the present invention.
FIG. 4 is a conceptual view illustrating the inter-busbar unit according to the embodiment of the present invention being assembled.
FIG. 5 is a conceptual view illustrating the inter-busbar unit according to the embodiment of the present invention being seated on a partition wall.
FIG. 6 is a view illustrating a pack housing according to an embodiment of the present invention.
FIG. 7 is a view illustrating a battery pack including the pack housing according to the embodiment of the present invention.
FIG. 8 is an enlarged view of A shown in FIG. 7.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, an inter-busbar unit according to the present invention will be described.

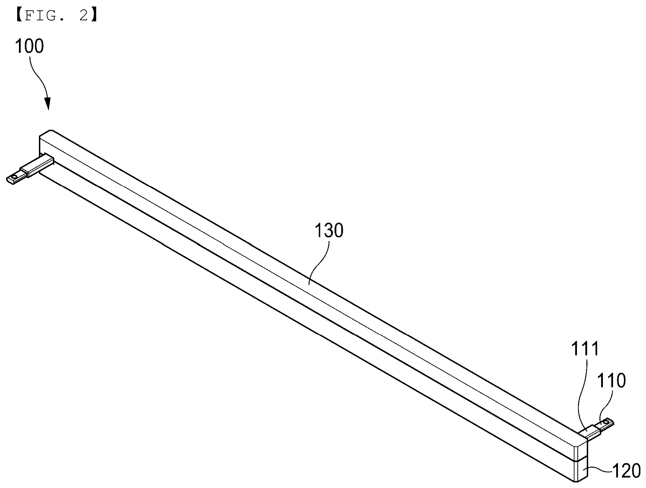

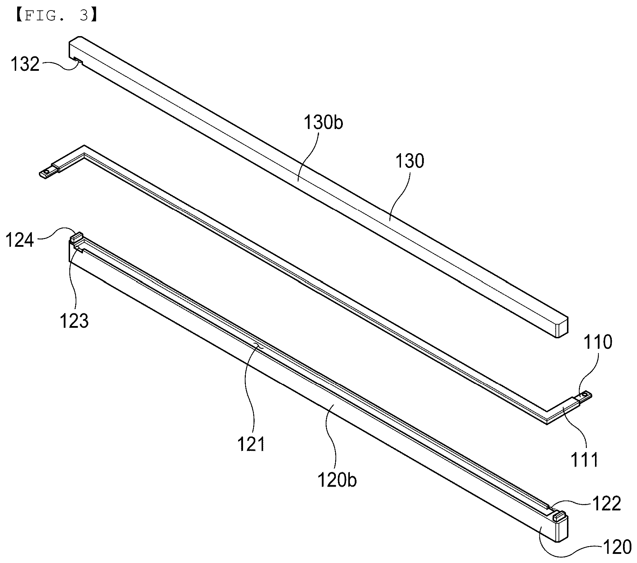

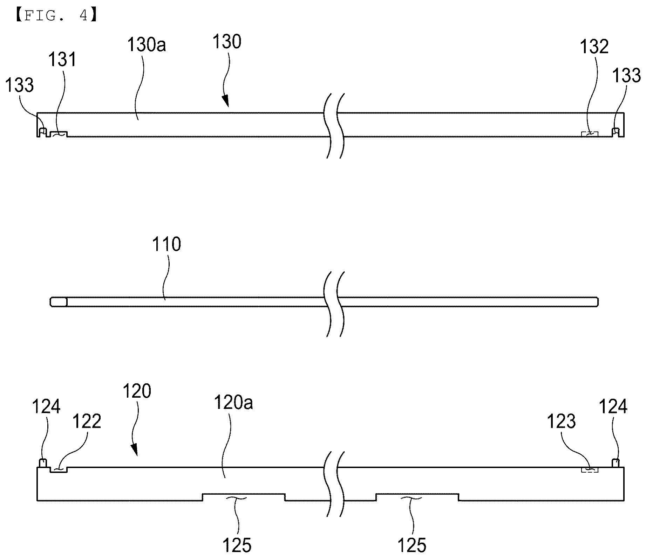

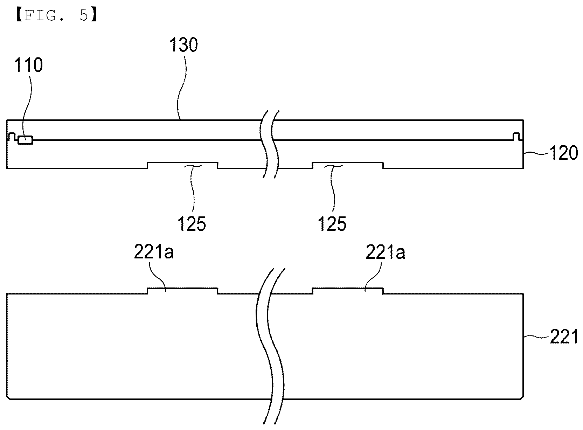

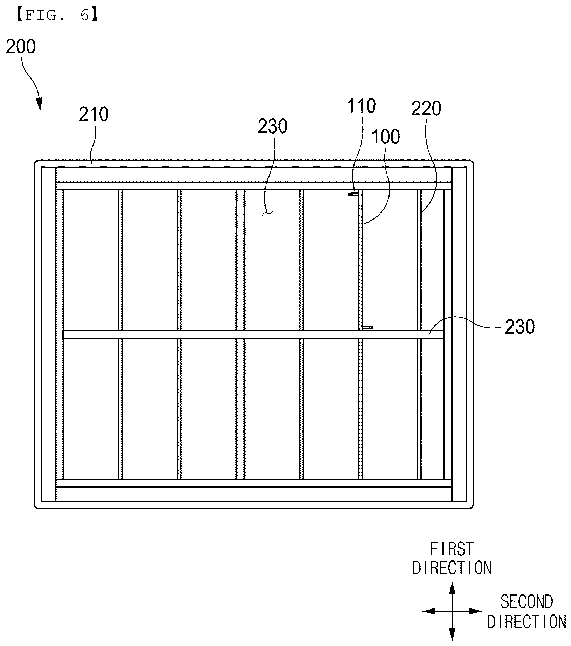

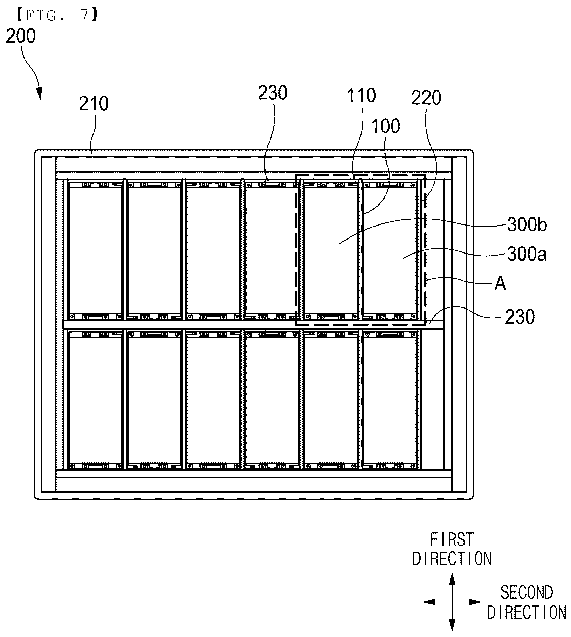

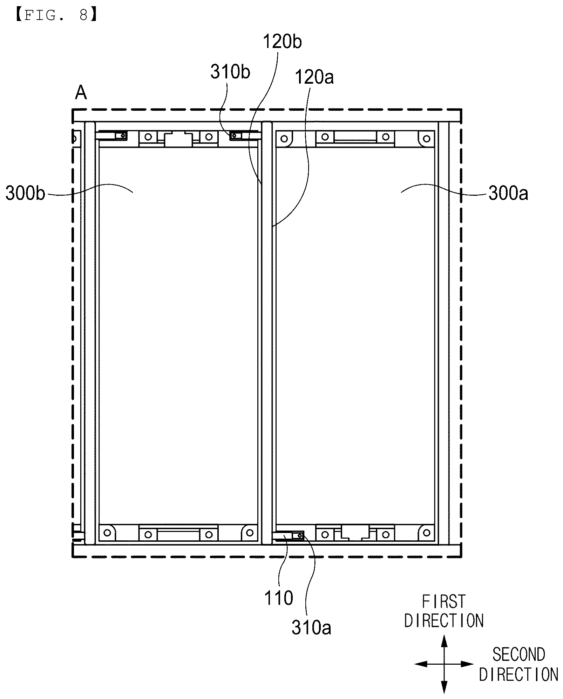

FIG. 2 is a perspective view of an inter-busbar unit according to an embodiment of the present invention, FIG. 3 is an exploded perspective view of the inter-busbar unit according to the embodiment of the present invention, FIG. 4 is a conceptual view illustrating the inter-busbar unit according to the embodiment of the present invention being assembled, and FIG. 5 is a conceptual view illustrating the inter-busbar unit according to the embodiment of the present invention being seated on a partition wall. In addition, FIG. 6 is a view illustrating a pack housing according to an embodiment of the present invention, FIG. 7 is a view illustrating a battery pack including the pack housing according to the embodiment of the present invention, and FIG. 8 is an enlarged view of A shown in FIG. 7.

Referring to FIGs. 2 to 8, the inter-busbar unit 100 includes a conductive member 110, a first partition wall unit 120, and a second partition wall unit 130.

First, the conductive member 110 may be configured to be electrically connected to module terminals 310 provided at battery modules 300. For example, both ends of the conductive member 110 may contact the module terminals 310, whereby the conductive member 110 may be electrically connected to the module terminals 310.

The conductive member 110 may be made of an electrically conductive material including a metal material. For example, the conductive member 110 may be made of a metal plate. More specifically, the conductive member 110 may be made of copper, aluminum, nickel, gold, silver, or a combination thereof.

The conductive member 110 may extend in an extension direction in which the first partition wall unit 120 extends (an 11 o'clock to 5 o'clock direction in FIG. 2). For example, the conductive member 110 may extend in the extension direction in which the first partition wall unit 120 extends, and the extension length of the conductive member 110 may be less than the extension length of the first partition wall unit 120. Here, the extension length of the conductive member 110 may be the length extending in the extension direction (the 11 o'clock to 5 o'clock direction in FIG. 2).

In addition, ends of the conductive member 110 may be bent in different directions. For example, one end of the conductive member 110 may be bent in a 2 o'clock direction in FIG. 2, and the other end of the conductive member may be bent in an 8 o'clock direction in FIG. 2.

The conductive member 110 may electrically connect module terminals 310 of adjacent battery modules 300 when the adjacent battery modules 300 are disposed in different directions.

In addition, an insulating material 111 may be applied to the remaining area of the outer surface of the conductive member 110 excluding both ends, which are the areas in contact with the module terminals 310.

The insulating material 111 may be an external insulating material, which is a component constituting the inter-busbar unit, and may prevent electrification during subsequent battery pack manufacturing. For example, the insulating material 111 may be at least one of polybutylene terephthalate (PBT), plastic, an inorganic oxide, or a non-conductive metal.

A seating recess 121, in which the conductive member 110 is seated, may be formed in the first partition wall unit 120, and the seating recess 121 may be formed in an upper surface of the first partition wall unit 120 so as to extend in the extension direction.

The seating recess 121 may be formed so as to correspond to the extension length of the conductive member 110. For example, the seating recess 121 may be formed at a height corresponding to the thickness of the conductive member 110. In another example, the seating recess 121 may be formed at a height corresponding to half (1/2) of the thickness of the conductive member 110. However, the height of the seating recess 121 is not limited thereto, and may be formed at a height that can receive a part of the conductive member 110.

If the height of the seating recess 121 of the first partition wall unit 120 is less than the height of the conductive member 110, a receiving recess (not shown) may be formed in the second partition wall unit 130 so as to receive the remaining area of the conductive member 110 after the conductive member 110 is seated in the seating recess 121.

The second partition wall unit 130 may be seated on the first partition wall unit 120. That is, the conductive member 110 may be interposed between the first partition wall unit 120 and the second partition wall unit 130.

The first partition wall unit 120 may be provided on an upper surface thereof with a protrusion 124 that partially protrudes upward (12 o'clock in FIG. 3). The protrusion 124 may be provided at both ends of the first partition wall unit 120.

In other words, the protrusion 124 may be provided at both ends of the first partition wall unit 120 excluding the area where the seating recess 121 is formed.

In addition, the second partition wall unit 130 may be provided in a lower surface thereof (6 o'clock in FIG. 3) with a depression 133 that is partially depressed upward so as to correspond to the protrusion 124 of the first partition wall unit 120.

The depression 133 may be configured to be coupled to the protrusion 124. The protrusion 124 and the depression 133 may be provided in shapes corresponding to each other.

Here, that the protrusion 124 and the depression 133 correspond in shape to each other may mean that the protrusion and the depression are provided so as to engage with each other, the depression 133 is formed in the shape of a larger recess than the protrusion 124 such that the protrusion 124 can be inserted into the depression 133, and a predetermined gap is formed between an outer surface of the protrusion 124 and an inner surface of the depression 133.

In addition, a depression that is partially depressed downward may be provided in the upper surface of the first partition wall unit 120, and a protrusion that partially protrudes downward may be provided on the lower surface of the second partition wall unit 130.

In addition, each of the first partition wall unit 120 and the second partition wall unit 130 may be made of the same material as a partition wall 220. A detailed description thereof will be given later.

The first partition wall unit 120 may be provided with a first opening 122 formed such that one end of the conductive member 110 is exposed from a first side surface 120a facing the battery module 300 located on one side. For example, the first opening 122 may be formed as the result of the seating recess 121 extending such that one end of the conductive member 110 is exposed from the first side surface 120a.

The second partition wall unit 130 may be provided with a third opening 131 formed so as to correspond to the first opening 122 such that one end of the conductive member 110 is exposed from a third side surface 130a facing the battery module 300 located on one side. For example, the third opening 131 may be formed as the result of the receiving recess (not shown) extending such that one end of the conductive member 110 is exposed from the third side surface 130a.

The first opening 122 and the third opening 131 may be formed at positions corresponding to each other so as to form a single hole when overlapping each other, and one end of the conductive member 110 may be exposed through the hole.

The first side surface 120a of the first partition wall unit 120 and the third side surface 130a of the second partition wall unit 130 may be side surfaces in the same direction.

In addition, the first partition wall unit 120 may be provided with a second opening 123 formed such that the other end of the conductive member 110 is exposed from a second side surface 120b facing the battery module 300 located on the other side. For example, the second opening 123 may be formed as the result of the seating recess 121 extending such that the other end of the conductive member 120 is exposed from the second side surface 120b.

The second partition wall unit 130 may be provided with a fourth opening 132 formed so as to correspond to the second opening 123 such that the other end of the conductive member 110 is exposed from a fourth side surface 130b facing the battery module 300 located on the other side. For example, the fourth opening 132 may be formed as the result of the receiving recess (not shown) extending such that the other end of the conductive member 110 is exposed from the fourth side surface 130b.

The second opening 123 and the fourth opening 132 may be formed at positions corresponding to each other so as to form a single hole when overlapping each other, and the other end of the conductive member 110 may be exposed through the hole.

The second side surface 120b of the first partition wall unit 120 and the fourth side surface 130b of the second partition wall unit 130 may be side surfaces in the same direction.

The first opening 122 and the second opening 123 may be formed at positions that do not overlap each other in a thickness direction of the first partition wall unit 120, and the third opening 131 and the fourth opening 132 may be formed at positions that do not overlap each other in a thickness direction of the second partition wall unit 130.

Accordingly, opposite ends of the conductive member 110 may be exposed to different sides.

In addition, an extension portion of the conductive member 110, excluding the opposite ends exposed to different sides, may be received in the seating recess 121 of the first partition wall unit 120 and the receiving recess (not shown) of the second partition wall unit 130 such that the area exposed to discharge is minimized, whereby it is possible to reduce the probability of the conductive member 110 being in contact with spark particles compared to the prior art.

Hereinafter, a pack housing and a battery pack including the inter-busbar unit according to the present invention will be described.

First, the pack housing 200 includes an outer frame 210, a partition wall 220, and an inter-busbar unit 100. In addition, the pack housing 200 may include an upper case (not shown) and a lower case (not shown).

First, the outer frame 210 may have an empty space formed therein, and a plurality of battery modules 300 and the partition wall 220 may be received in the empty space. For example, the outer frame 210 may be configured in the form of a box when coupled to the upper case (not shown) and the lower case (not shown).

The partition wall 220 may include a first partition wall 221 and a second partition wall 222. The partition wall 220 may be provided in the outer frame 210, and may be disposed in the form of a lattice to form a plurality of receiving recesses 230 configured to receive the battery modules 300.

The first partition wall 221 may be disposed in a first direction parallel to an axial direction (12 o'clock to 6 o'clock in FIG. 7) in which module terminals 310 of the battery modules 300 are disposed. In addition, the second partition wall 222 may be disposed in a second direction, which is perpendicular to the first direction.

For example, the second partition wall 222 may be disposed in the middle of the outer frame 210 in the first direction, and the first partition wall 221 may be disposed spaced apart from the outer frame 210 so as to correspond to the overall width of the battery module 300.

The distance between the outer frame 210 and the second partition wall 222 corresponds to the overall length of the battery module 300, and the distance between the outer frame 210 and the first partition wall 221 or between the first partition wall 221 and the first partition wall 221 may correspond to the overall width of the battery module 300.

As the first partition wall 221 and the second partition wall 222 are disposed as described above, the outer frame 210 and the partition wall 220 may form a plurality of receiving recesses 230 configured to receive the battery modules 300. The size of each of the plurality of receiving recesses 230 may correspond to the size of the battery module 300.

Meanwhile, the inter-busbar unit 100 may be seated on the partition wall 220.

More specifically, the inter-busbar unit 100 may be seated on the first partition wall 221 so as to electrically connect the module terminals 310 of the battery modules 300 adjacent to each other in the second direction, which are received in the plurality of receiving recesses 230.

A coupling protrusion 221a may be formed on an upper surface of the first partition wall 221 so as to partially protrude upward. The coupling protrusion 221a may be provided in one or more so as to be formed on the upper surface of the first partition wall 221.

In addition, a coupling recess 125 corresponding to the coupling protrusion 221a may be formed in a lower surface of the first partition wall unit 120 of the inter-busbar unit 100 seated on the upper surface of the first partition wall 221 so as to be partially depressed upward.

The coupling recess 125 may be configured to be coupled to the coupling protrusion 221a. The coupling protrusion 221a and the coupling recess 125 may be provided in shapes corresponding to each other.

Here, that the coupling protrusion 221a and the coupling recess 125 correspond in shape to each other may mean that the coupling protrusion and the coupling recess are provided so as to engage with each other, the coupling recess 125 is formed in the shape of a larger recess than the coupling protrusion 221a such that the coupling protrusion 221a can be inserted into the coupling recess 125, and a predetermined gap is formed between an outer surface of the coupling protrusion 221a and an inner surface of the coupling recess 125.

In addition, a coupling recess that is partially depressed downward may be formed in the upper surface of the first partition wall 221, and a coupling protrusion that partially protrudes downward may be formed on the lower surface of the first partition wall unit 120.

The height of the first partition wall 221 is preferably great enough that, when the inter-busbar unit 100 is seated on the upper surface of the first partition wall, both ends of the conductive member 110 can be seated on the upper surface of the module terminal 310.

In addition, the inter-busbar unit 100 may be seated on the second partition wall 222 as needed.

Meanwhile, the battery pack according to the embodiment of the present invention includes a pack housing 200 and a battery module 300.

As described above, the pack housing 200 includes an inter-busbar unit 100, an outer frame 210, and a partition wall 220. The pack housing 200 including the inter-busbar unit 100 is the same as described above, and therefore a more detailed description thereof will be omitted.

The battery module 300 may include a cell assembly (not shown), a module case (not shown), and a module terminal 310.

First, the cell assembly (not shown) may include a plurality of battery cells. The battery cell may be a pouch-shaped secondary battery including an electrode assembly, an electrode lead, and a battery case.

The electrode assembly may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

The positive electrode includes a positive electrode current collector and a positive electrode active material applied to each of an upper surface and a lower surface of the positive electrode current collector. The positive electrode active material may be mixed with a conductive agent and a binder, and a filler is further added as needed.

The negative electrode includes a negative electrode current collector and a negative electrode active material applied to each of an upper surface and a lower surface of the negative electrode current collector. The negative electrode active material may be further mixed with a conductive agent and a binder, and the negative electrode current collector may be coated with the mixture.

The separator prevents short circuit between the negative electrode and the positive electrode and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

The battery case, which receives the electrode assembly, is made of a laminate sheet including an outer covering layer, a metal layer, and an inner covering layer, and has a receiving portion formed therein.

The inner covering layer is in direct contact with the electrode assembly, and therefore the inner covering layer must exhibit high insulation properties and high electrolytic resistance. In addition, the inner covering layer must exhibit high sealability in order to hermetically isolate the battery case from the outside, i.e., a thermally-bonded sealed portion between inner layers must exhibit excellent thermal bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The metal layer, which abuts the inner covering layer, corresponds to a barrier layer configured to prevent moisture or various gases from permeating into the battery from the outside. An aluminum thin film, which is lightweight and easily shapeable, may be used as a preferred material for the metal layer.

The outer covering layer is provided at the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

In addition, the module case (not shown) may receive the cell assembly (not shown) in an inner space defined therein. The battery module 300 according to the present invention is not particularly restricted in shape or configuration, and a variety of battery modules 300 may be provided.

The battery module 300 includes a module terminal 310, and may be provided in plural. The plurality of battery modules 300 may be received in the plurality of receiving recesses 230 of the pack housing 200, respectively.

At this time, the plurality of battery modules 300 may be disposed such that the position of the module terminal 310 of each battery module 300 does not overlap the position of the module terminal 310 of the battery module 300 closest thereto in the second direction.

Referring to FIGs. 7 and 8, a module terminal 310a of a first battery module 300a may be disposed so as to face a 6 o'clock direction, and a module terminal 310b of a second battery module 300b may be disposed so as to face a 12 o'clock direction. In this case, one end of the inter-busbar unit 100 may be electrically connected to the module terminal 310a of the first battery module 300a, and the other end of the inter-busbar unit 100 may be electrically connected to the module terminal 310b of the second battery module 300b.

Next, a method of manufacturing a battery pack according to an embodiment of the present invention will be described with reference to FIGs. 2 to 8.

The method of manufacturing the battery pack according to the present invention includes (S1) receiving a plurality of battery modules 300 in a plurality of receiving recesses 230, (S2) coupling a coupling recess 125 of an inter-busbar unit 100 and a coupling protrusion 221a of a first partition wall 221 to each other such that the inter-busbar unit 100 and the first partition wall 221 are coupled to each other, and (S3) bringing module terminals 310 into electrical contact with a conductive member 110.

In step (S1), the battery modules 300 may be disposed such that the position of the module terminal 310 of each battery module 300 does not overlap the position of the module terminal 310 of the battery module 300 closest thereto in the second direction.

For example, in step (S3), when the module terminals 310 are brought into electrical contact with the conductive member 110, the conductive member 110 may be seated on upper surfaces of the module terminals 310 so as to be in electrical contact therewith, or the conductive member may be connected to the module terminals by fastening using a bolt.

In addition, the method of manufacturing the battery pack according to the present invention may include adding an insulating material to an upper surface of the conductive member 110 after step (S3). Here, the insulating material may be heat-resistant silicone or insulating tape.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

100: Inter-busbar unit
110: Conductive member 111: Insulating material
120: First partition wall unit
120a: First side surface 120b: Second side surface
121: Seating recess
122: First opening 123: Second opening
124: Protrusion 125: Coupling recess
130: Second partition wall unit
130a: First side surface 130b: Second side surface
131: Third opening 132: Fourth opening
133: Depression
200: Pack housing
210: Outer frame
220: Partition wall
221: First partition wall 221a: Coupling protrusion
222: Second partition wall
300: Battery module 310: Module terminal

## Claims

1. An inter-busbar unit comprising:
a conductive member electrically connected to a module terminal at a battery module;
a first partition wall unit having a seating recess allowing the conductive member to be seated therein; and
a second partition wall unit seated on an upper portion of the first partition wall unit, wherein opposite ends of the conductive member are exposed to different sides.

2. The inter-busbar unit according to claim 1, wherein
the conductive member extends in an extension direction in which the first partition wall unit extends, and
the seating recess is formed in an upper surface of the first partition wall unit and extending in the extension direction.

3. The inter-busbar unit according to claim 2, wherein
the first partition wall unit includes a first opening that exposes one end of the conductive member from a first side surface facing the battery module located on one side, and
the second partition wall unit includes a third opening that corresponds to the first opening and that exposes one end of the conductive member from a third side surface facing the battery module located on one side.

4. The inter-busbar unit according to claim 3, wherein
the first partition wall unit includes a second opening that exposes the other end of the conductive member from a second side surface facing the battery module on the other side, and
the second partition wall unit includes a fourth opening that corresponds to the second opening and that exposes the other end of the conductive member is exposed from a fourth side surface facing the battery module on the other side.

5. The inter-busbar unit according to claim 4, wherein
the first opening and the second opening are formed at positions that do not overlap each other in a thickness direction of the first partition wall unit, and
the third opening and the fourth opening are formed at positions that do not overlap each other in a thickness direction of the second partition wall unit.

6. The inter-busbar unit according to claim 1, wherein
the first partition wall unit is on an upper surface thereof with a protrusion that partially protrudes upward, and
the protrusion is at both ends of the first partition wall unit.

7. The inter-busbar unit according to claim 6, wherein
the second partition wall unit is in a lower surface thereof with a depression that is partially depressed upward and that corresponds to the protrusion, and
the depression is configured to be coupled to the protrusion.

8. The inter-busbar unit according to claim 1, wherein the conductive member is made of an electrically conductive material comprising a metal material.

9. The inter-busbar unit according to claim 8, wherein an insulating material is applied to a remaining area of an outer surface of the conductive member excluding an area in contact with the module terminal.

10. A pack housing comprising the inter-busbar unit according to any one of claims 1 to 9, the pack housing comprising:
an outer frame;
a lattice-shaped partition wall in the outer frame, the partition wall being disposed so as to form a plurality of receiving recesses each configured to receive the battery module; and
an inter-busbar unit seated on an upper portion of the partition wall.

11. The pack housing according to claim 10, wherein the partition wall comprises:
a first partition wall disposed in a first direction parallel to an axial direction in which the module terminal of the battery module is disposed; and
a second partition wall disposed in a second direction perpendicular to the first direction.

12. The pack housing according to claim 11, wherein a coupling protrusion is formed on an upper surface of the first partition wall and partially protruding upward.

13. The pack housing according to claim 12, wherein
a coupling recess corresponding to the coupling protrusion is formed in a lower surface of the first partition wall unit and partially depressed upward, and
the coupling recess is configured to be coupled to the coupling protrusion.

14. A battery pack comprising the pack housing according to any one of claims 10 to 13, the battery pack comprising:
the pack housing comprising the inter-busbar unit, the outer frame, and the partition wall; and
a plurality of battery modules, each of the battery modules having the module terminal.

15. The battery pack according to claim 14, wherein the plurality of battery modules is disposed such that a position of the module terminal of each battery module does not overlap a position of the module terminal of a battery module closest thereto in the second direction.

16. A method of manufacturing the battery pack according to any one of claims 14 and 15, the method comprising:
(S1) receiving the plurality of battery modules in the plurality of receiving recesses;
(S2) coupling the coupling recess of the inter-busbar unit and the coupling protrusion of the first partition wall to each other thereby coupling the inter-busbar unit and the first partition wall to each other; and
(S3) bringing the module terminals into electrical contact with the conductive member.

17. The method according to claim 16, wherein, in step (S1), the battery modules are disposed such that the position of the module terminal of each battery module does not overlap the position of the module terminal of a battery module closest thereto in the second direction.

18. The method according to claim 16, further comprising adding an insulating material to an upper surface of the conductive member (110) after step (S3).
